# EUROPÄISCHE PATENTANMELDUNG

(11) **EP 3 338 945 A1**
(43) Veröffentlichungstag der Anmeldung: **27.06.2018**
(21) Anmeldenummer: 16206516.3
(22) Anmeldetag: 22.12.2016
(51) Int. Cl.: B23Q 17/09, A61C 1/00, B23Q 17/22

(54) **DENTALFRAESMASCHINE MIT EINER FRAESSPINDEL**

(71) Anmelder: Huber, Martin, 5452 Pfarrwerfen (AT); Wörmer, Alfons, 5452 Pfarrwerfen (AT)
(72) Erfinder: HUBER, Martin, 5452 Pfarrwerfen (AT); WÖRMER, Alfons, 5500 Bischofshofen (AT)
(74) Vertreter: Baronetzky, Klaus

(57) **Zusammenfassung**

Die Erfindung betrifft eine Dentalfräsmaschine (1),wobei der Positionssensor (16) eine Sensorspitze (16a) aufweist, die von der Spindelachse (A1) um weniger als 20mm beabstandet ist und insbesondere im Wesentlichen parallel zu dieser geführt ist, dass das Fräswerkzeug (14) einen Vorsprung (20), insbesondere einen Ring aufweist, der von der Spitze (14a) des Fräswerkzeugs (14) beabstandet ist, dass die Sensorspitze (16a) den Vorsprung (20), insbesondere den Ring, für die Erfassung der Position für die Bereitstellung eines Stromkreises berührt und dass der Abstand (D) zwischen einer Spitze (14a) des Fräswerkzeugs (14) und dem Vorsprung (20), insbesondere dem Ring, werkzeugspezifisch vorgegeben ist, insbesondere mit einer Genauigkeit von weniger als 50 µm, besonders bevorzugt weniger als 15 µm. Die Erfindung betrifft des Weiteren ein Verfahren zum Betreiben der Dentalfräsmaschine (1).

## Beschreibung

Die Erfindung betrifft eine Dentalfräsmaschine. Die Erfindung betrifft des Weiteren ein Verfahren zum Betreiben einer Dentalfräsmaschine.

### Stand der Technik

Systeme zur Werkzeuglängenmessung sind Kernkomponenten von vollautomatisierten CNC-Maschinen. Herkömmliche Werkzeuglängenmesseinrichtungen sind jedoch für sehr kleine CNC-Maschinen nicht geeignet, da diese keine kosteneffektive Lösung darstellen.

Die DE 10 2013 100 155 A1 offenbart eine mechanische Schnittstelle für die Kopplung von einem Modul an einen Modulträger oder für die Kopplung von zwei Modulen umfassend eine erste Schnittstellenkomponente, eine zweite Schnittstellenkomponente, wobei die Schnittstellenkomponenten zueinander komplementär sind, ein Positionierungsmittel zur wiederholbaren Positionierung der zweiten Schnittstellenkomponente und der ersten Schnittstellenkomponente zueinander in einer vorbestimmten Position und ein Haltemittel zur Halterung der zweiten Schnittstellenkomponente an der ersten Schnittstellenkomponente, wobei die Schnittstelle ein Datenübertragungsmittel zur Übertragung von Daten zwischen der ersten Schnittstellenkomponente und der zweiten Schnittstellenkomponente und ein Leistungsübertragungsmittel zur Übertragung von elektrischer Leistung zwischen der ersten Schnittstellenkomponente und der zweiten Schnittstellenkomponente aufweist.

Der Erfindung liegt somit die Aufgabe zugrunde, eine verbesserte Dentalfräsmaschine sowie ein verbessertes Verfahren zum Betreiben einer Dentalfräsmaschine bereitzustellen, welche es ermöglichen, die Dentalfräsmaschine automatisch zu kalibrieren und durch Messung einer Werkzeuglänge eines Fräswerkzeugs somit Herstellungstoleranzen des Fräswerkzeugs in die Kalibrierung der Dentalfräsmaschine miteinzubeziehen.

Die Aufgabe wird mit einer Dentalfräsmaschine mit den Merkmalen des Patentanspruchs 1 gelöst. Des Weiteren wird die Aufgabe mit einem Verfahren zum Betreiben einer Dentalfräsmaschine mit den Merkmalen des Patentanspruchs 7 gelöst.

### Offenbarung der Erfindung

Die vorliegende Erfindung schafft eine Dentalfräsmaschine mit einer Frässpindel, die in einem Spannfutter geführt ist, wobei das Spannfutter insbesondere drehbar, im Übrigen jedoch maschinenfest gelagert ist und wobei ein Fräswerkzeug elektrisch leitend mit der Dentalfräsmaschine verbunden ist, mit einem elektrisch leitenden Positionssensor, der gegenüber der Frässpindel mindestens in Richtung der Spindelachse bewegbar gelagert ist, und mit einer Steuervorrichtung, die eine elektrische Spannung zwischen dem Positionssensor und dem Fräswerkzeug erzeugt und über die Erkennung eines elektrischen Stromes durch den Positionssensor hindurch die Relativposition des Positionssensors zum Fräswerkzeug erfasst, wobei der Positionssensor eine Sensorspitze aufweist, die von der Spindelachse um weniger als 20mm beabstandet ist und insbesondere im Wesentlichen parallel zu dieser geführt ist, dass das Fräswerkzeug einen Vorsprung, insbesondere einen Ring aufweist, der von einer Spitze des Fräswerkzeugs beabstandet ist, dass die Sensorspitze eine zum Fräswerkzeug benachbart angeordnete Stirnseite des Vorsprungs, insbesondere des Rings, für die Erfassung der Position für die Bereitstellung eines Stromkreises berührt und dass ein Abstand zwischen der Spitze des Fräswerkzeugs und dem Vorsprung, insbesondere dem Ring, werkzeugspezifisch vorgegeben ist, insbesondere mit einer Genauigkeit von weniger als 50 µm, besonders bevorzugt weniger als 15 µm.

Die Erfindung schafft des Weiteren ein Verfahren zum Betreiben einer Dentalfräsmaschine. Das Verfahren umfasst ein Bereitstellen einer Frässpindel, die in einem Spannfutter geführt ist, wobei das Spannfutter insbesondere drehbar, im Übrigen jedoch maschinenfest gelagert ist und wobei das Fräswerkzeug elektrisch leitend mit der Dentalfräsmaschine verbunden ist.

Das Verfahren umfasst des Weiteren ein Bereitstellen eines elektrisch leitenden Positionssensors, der gegenüber der Frässpindel mindestens in Richtung der Spindelachse bewegbar gelagert ist.

Das Verfahren umfasst überdies ein Bereitstellen einer Steuervorrichtung, die eine elektrische Spannung zwischen dem Positionssensor und dem Fräswerkzeug erzeugt und über die Erkennung eines elektrischen Stromes durch den Positionssensor hindurch die Relativposition des Positionssensors zum Fräswerkzeug erfasst, wobei der Positionssensor eine Sensorspitze aufweist, die von der Spindelachse um weniger als 20mm beabstandet ist und insbesondere im Wesentlichen parallel zu dieser geführt ist, dass das Fräswerkzeug einen Vorsprung, insbesondere einen Ring aufweist, der von der Spitze des Fräswerkzeugs beabstandet ist, dass die Sensorspitze den Vorsprung, insbesondere den Ring, für die Erfassung der Position für die Bereitstellung eines Stromkreises berührt und dass der Abstand zwischen der Spitze des Fräswerkzeugs und dem Vorsprung, insbesondere dem Ring, werkzeugspezifisch vorgegeben ist, insbesondere mit einer Genauigkeit von weniger als 50 µm, besonders bevorzugt weniger als 15 µm.

Eine Idee der vorliegenden Erfindung ist es, durch Vorsehen des Sensors eine genaue Vermessung der Länge des Fräswerkzeugs der Dentalfräsmaschine bereitzustellen. Insbesondere vorteilhaft ist die Tatsache, dass der Sensor in der Dentalfräsmaschine integriert ist und über den Sensor selbst in Verbindung mit einer entsprechenden Auswertevorrichtung die Längendaten betreffend die Länge des Fräswerkzeugs gewonnen werden können. Somit kann auf das Vorsehen einer externen Messvorrichtung, wie beispielsweise einer optischen Messvorrichtung, verzichtet werden.

Vorteilhafte Ausführungsformen und Weiterbildungen ergeben sich aus den Unteransprüchen sowie aus der Beschreibung unter Bezugnahme auf die Figuren.

Gemäß einer bevorzugten Weiterbildung ist vorgesehen, dass der Vorsprung, insbesondere der Ring, auf das Fräswerkzeug an dessen Schaft aufgebracht ist, der eine plane Oberfläche mit einer Genauigkeit von insbesondere 15 µm aufweist, bezogen auf den Abstand zur Spitze des Fräswerkzeugs. Durch Vorsehen des Vorsprungs an dem Schaft des Fräswerkzeugs, welcher konzentrisch zu der Spindelachse angeordnet ist, kann somit eine besonders genaue Messung ermöglicht werden.

Gemäß einer weiteren bevorzugten Weiterbildung ist vorgesehen, dass die Spitze des Fräswerkzeugs mit elektrisch isolierenden Körnern oder Schichten versehen ist, insbesondere mit einer Diamant-Bestückung.

Gemäß einer weiteren bevorzugten Weiterbildung ist vorgesehen, dass eine Fräswerkzeug-Erkennungsvorrichtung vorgesehen ist, die das betreffende Fräswerkzeug anhand eines Codes, insbesondere eines optischen zweidimensionalen Codes, insbesondere vorzugsweise eines Data-Matrix-Codes, erfasst, wobei das Fräswerkzeug vorvermessen und sein Abstand zwischen Ring und Spitze des Fräswerkzeugs abgespeichert ist, insbesondere - auch - in der Steuervorrichtung. Somit kann das Fräswerkzeug sicher und zuverlässig erfasst werden.

Gemäß einer weiteren bevorzugten Weiterbildung ist vorgesehen, dass eine Temperaturerfassungsvorrichtung vorgesehen ist und dass die Steuervorrichtung einen Speicher für eine Dehnungstabelle aufweist, die die experimentell bestimmte Längung des Fräswerkzeugs basierend auf einer Temperaturänderung abspeichert und basierend auf dieser Längenänderung die exakte Position der Spitze des Fräswerkzeugs angibt. Somit ist die Position der Spitze des Fräswerkzeugs in vorteilhafter Weise bekannt und es muss somit lediglich mit dem Sensor die Position des Rings erfasst werden, um die exakte Länge des Fräswerkzeugs zu vermessen.

Gemäß einer weiteren bevorzugten Weiterbildung ist vorgesehen, dass der Vorsprung als Ring ausgebildet ist und insbesondere eine Nut aufweist, über welche das Fräswerkzeug mittels eines Werkzeug-Wechselarms erfassbar und aus der Frässpindel entnehmbar ist. Somit ist das Fräswerkzeug in vorteilhafter Weise derart ausgebildet, dass eine einfache Einführbarkeit und Entnehmbarkeit in bzw. aus der Frässpindel gegeben ist.

Gemäß einer weiteren bevorzugten Weiterbildung ist vorgesehen, dass der Positionssensor zur Positionsmessung in einem Winkel von 2° bis 5°, vorzugsweise in einem Winkel von 3° bis 4° gegenüber der der Spindelachse anstellbar ist. Somit kann eine verbesserte Referenzpunktmessung durch Anlage der Sensorspitze des Positionssensors an der Stirnseite des Vorsprungs, insbesondere des Rings mit einem Linienkontakt ermöglicht werden.

Gemäß einer weiteren bevorzugten Weiterbildung ist vorgesehen, dass der Positionssensor ein erstes Metallblech und ein zweites Metallblech aufweist, wobei das erste Metallblech ein erstes Halterungselement zur Halterung des Fräswerkzeugs und das zweite Metallblech ein zweites Halterungselement zur Halterung des Fräswerkzeugs aufweist, wobei das erste Halterungselement und das zweite Halterungselement aufeinander zu, jedoch mit einem axialen Versatz zueinander, gerichtet sind. Durch Vorsehen des Versatzes kann beispielsweise ein erstes Fräswerkzeug in dem ersten Halterungselement gehaltert und ein, in der Frässpindel aufgenommenes zweites Fräswerkzeug durch das zweite Halterungselement der Frässpindel entnommen werden.

Gemäß einer weiteren bevorzugten Weiterbildung ist vorgesehen, dass an einem oberen Endabschnitt der Frässpindel benachbart zu dem Schaft der Frässpindel eine ringförmig ausgebildete Fläche angeordnet ist, welche durch einen im Wesentlichen flach ausgebildeten Metallring ausgebildet ist, der an dem oberen Endabschnitt der Frässpindel in diese eingesetzt ist. Somit kann das Fräswerkzeug in vorteilhafter Weise exakt mittig in der Frässpindel positioniert werden.

Gemäß einer weiteren bevorzugten Weiterbildung ist vorgesehen, dass die ringförmig ausgebildete Fläche vorzugsweise eine Mehrzahl von Kontaktflächen aufweist, welche um den Umfang der ringförmig ausgebildeten Fläche herum verteilt angeordnet sind. Die Kontaktflächen dienen in vorteilhafter Weise der Kontaktierung durch den Positionssensor.

Gemäß einer weiteren bevorzugten Weiterbildung ist vorgesehen, dass die im Wesentlichen ringförmig ausgebildete Fläche eine Mehrzahl von Düsen aufweist, welche derart positioniert sind, dass eine jeweilige Düse zwischen benachbarten Kontaktflächen angeordnet ist. Somit sind die Düsen vorzugsweise in regelmäßigen Abständen um die ringförmig ausgebildete Fläche herum angeordnet.

Gemäß einer weiteren bevorzugten Weiterbildung ist vorgesehen, dass die Düsen dazu ausgebildet sind, zur Nassbearbeitung eines Werkstücks einen Flüssigkeitsstrahl auf das Fräswerkzeug zu richten, und wobei die Düsen dazu ausgebildet sind, Druckluft an eine Umgebung abzugeben. Somit sind die Düsen in vorteilhafter Weise für eine Mehrzahl von Zwecken einsetzbar.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:
- Fig. 1: eine schematische Darstellung der Dentalfräsmaschine gemäß einer bevorzugten Ausführungsform der Erfindung;
- Fig. 2: eine vergrößerte Detailansicht eines in Fig. 1 gezeigten Fräswerkzeugs gemäß der bevorzugten Ausführungsform der Erfindung;
- Fig. 2a: eine schematische Darstellung des Fräswerkzeugs gemäß einer weiteren bevorzugten Ausführungsform der Erfindung;
- Fig. 3: eine schematische Darstellung eines Positionssensors zum Erfassen einer Länge des Fräswerkzeugs gemäß der bevorzugten Ausführungsform der Erfindung;
- Fig. 4: eine vergrößerte Detailansicht des in Fig. 3 gezeigten Positionssensors gemäß der bevorzugten Ausführungsform der Erfindung;
- Fig. 5: eine schematische Darstellung des Positionssensors gemäß einer weiteren bevorzugten Ausführungsform der Erfindung; und
- Fig. 6: ein Ablaufdiagramm eines Verfahrens zum Betreiben der Dentalfräsmaschine gemäß der bevorzugten Ausführungsform der Erfindung.

In den Figuren der Zeichnungen bezeichnen gleiche Bezugszeichen gleiche oder funktionsgleiche Elemente, Bauteile oder Komponenten, soweit nichts Gegenteiliges angegeben ist.

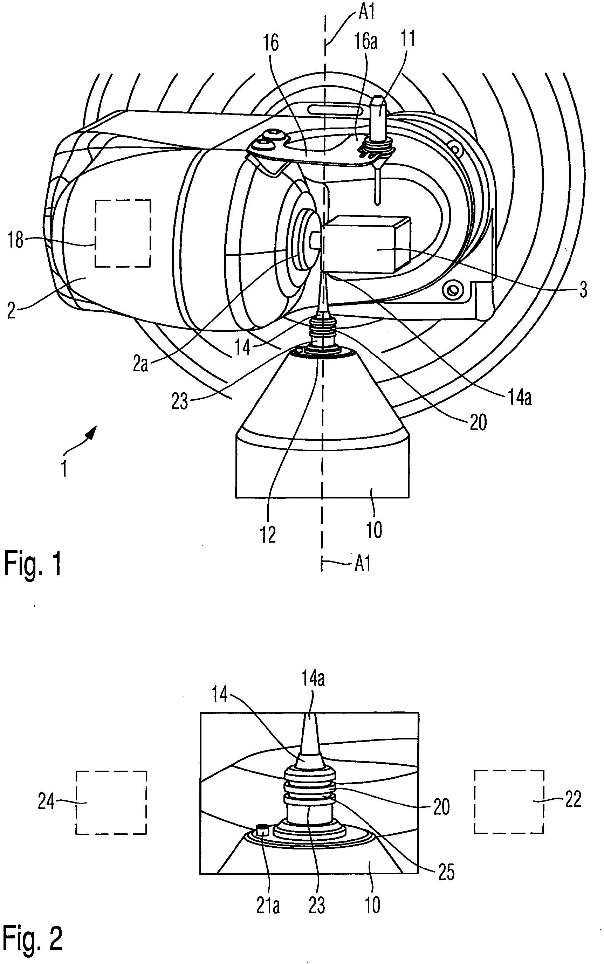

Fig. 1 zeigt eine schematische Darstellung der Dentalfräsmaschine gemäß einer bevorzugten Ausführungsform der Erfindung.

Die Dentalfräsmaschine 1 weist eine Frässpindel 10 auf, die in einem Spannfutter 12 geführt ist. Die Dentalfräsmaschine 1 weist überdies einen Roboterarm 2 auf, welcher mit einem Spannfutter 2a versehen ist, in welches ein Werkstück 3 mit einer entsprechenden (in Fig. 1 nicht gezeigten) Werkstückhalterung einsetzbar ist. Das Spannfutter 12 ist insbesondere drehbar, im Übrigen jedoch maschinenfest gelagert. Ein Fräswerkzeug 14 ist elektrisch leitend mit der Dentalfräsmaschine 1 verbunden. Des Weiteren weist die Dentalfräsmaschine 1 einen elektrisch leitenden Positionssensor 16 auf. Der Positionssensor 16 ist gegenüber der Frässpindel 10 mindestens in Richtung einer Spindelachse A1 bewegbar gelagert. Des Weiteren weist die Dentalfräsmaschine 1 eine Steuervorrichtung 18 auf. Die Steuervorrichtung 18 ist dazu ausgebildet, eine elektrische Spannung zwischen dem Positionssensor 16 und dem Fräswerkzeug 14 zu erzeugen und über die Erkennung eines elektrischen Stromes durch den Positionssensor 16 hindurch die Relativposition des Positionssensors 16 zum Fräswerkzeug 14 zu erfassen. Der Positionssensor 16 weist eine Sensorspitze 16a auf, die von der Spindelachse A1 um weniger als 20 mm beabstandet ist und insbesondere im Wesentlichen parallel zu dieser geführt ist.

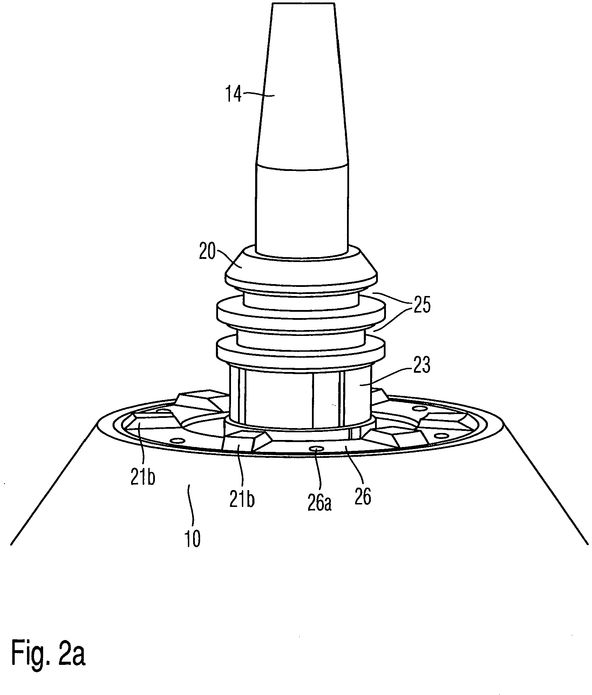

Fig. 2 zeigt eine vergrößerte Detailansicht eines in Fig. 1 gezeigten Fräswerkzeugs gemäß der bevorzugten Ausführungsform der Erfindung.

Das Fräswerkzeug 14 weist einen Vorsprung 20 auf. Der Vorsprung 20 ist im vorliegenden Ausführungsbeispiel als Ring ausgebildet. Der Vorsprung 20 ist von der Spitze 14a des Fräswerkzeugs 14 derart beabstandet angeordnet, dass die (in Fig. 2 nicht gezeigte) Sensorspitze 16a des Positionssensors 16 eine zum Fräswerkzeug 14 benachbart angeordnete Stirnseite des Vorsprungs 20, insbesondere des Rings, für die Erfassung der Position für die Bereitstellung eines Stromkreises berührt und dass der Abstand D zwischen der Spitze 14a des Fräswerkzeugs 14 und dem Vorsprung 20 werkzeugtechnisch vorgegeben ist, insbesondere mit einer Genauigkeit von weniger als 50 µm, besonders bevorzugt weniger als 15 µm.

Der Vorsprung 20 ist auf das Fräswerkzeug 14 an dessen Schaft 23 aufgebracht. Der Schaft 23 weist eine plane Oberfläche mit einer Genauigkeit von insbesondere 15 µm auf, bezogen auf den Abstand D zur Spitze des Fräswerkzeugs. Die Spitze 14a des Fräswerkzeugs ist vorzugsweise mit elektrisch isolierenden Körnern, insbesondere mit einer Diamant-Bestückung, versehen. Alternativ können beispielsweise elektrisch isolierende Schichten vorgesehen sein.

Eine Fräswerkzeug-Erkennungsvorrichtung 22 ist vorgesehen. Die Fräswerkzeug-Erkennungsvorrichtung 22 erfasst das betreffende Fräswerkzeug 14 anhand eines Codes, insbesondere eines optischen zweidimensionalen Codes, insbesondere vorzugsweise eines Data-Matrix-Codes. Das Fräswerkzeug ist vorvermessen und sein Abstand D zwischen Vorsprung 20 und Spitze 14a des Fräswerkzeugs 14 abgespeichert, insbesondere auch in der Steuervorrichtung 18. Des Weiteren weist die Dentalfräsmaschine 1 eine Temperaturerfassungsvorrichtung 24 auf. Die Steuervorrichtung 18 weist einen Speicher für eine Dehnungstabelle auf, die die experimentell bestimmte Längung des Fräswerkzeugs basierend auf einer Temperaturänderung abspeichert und basierend auf dieser Längenänderung die exakte Position der Spitze des Fräswerkzeugs angibt.

Der Vorsprung 20 ist als Ring ausgebildet und weist insbesondere ein Nut auf, über welche das Fräswerkzeug mittels eines Werkzeug-Wechselarms erfassbar und aus der Frässpindel 10 entnehmbar ist.

Die Frässpindel 10 weist des Weiteren benachbart zu dem aus der Frässpindel 10 austretenden Schaft 23 eine im Wesentlichen ringförmige Fläche auf. An der im Wesentlichen ringförmigen Fläche ist eine Kontaktfläche 21a ausgebildet. Die Kontaktfläche 21a ist in Form eines Vorsprungs ausgebildet, welcher von der im Wesentlichen ringförmigen Fläche hervorsteht. Die Kontaktfläche 21a ist im Wesentlichen zylindrisch ausgebildet. Alternativ kann die Kontaktfläche 21a beispielsweise eine andere geometrische Form aufweisen. Die Kontaktfläche 21a dient als Kontaktfläche für den (in Fig. 2 nicht gezeigten) Positionssensor 16. Durch Kontaktierung der Kontaktfläche 21a durch den Positionssensor 16 kann somit über die Erkennung eines elektrischen Stromes durch den Positionssensor 16 die Relativposition des Positionssensors 16 zum Fräswerkzeug 14 erfasst werden. Der Vorsprung 20 weist überdies zwei Nuten 25 auf, welche um einen Umfang des Vorsprungs 20 umlaufend sowie voneinander beabstandet angeordnet sind.

Fig. 2a zeigt eine schematische Darstellung des Fräswerkzeugs gemäß einer weiteren bevorzugten Ausführungsform der Erfindung.

An einem oberen Endabschnitt der Frässpindel 10 benachbart zu dem Schaft der Frässpindel 10 ist die ringförmig ausgebildete Fläche 26 angeordnet. Die ringförmig ausgebildete Fläche 26 ist durch einen im Wesentlichen flach ausgebildeten Metallring ausgebildet, welcher an dem oberen Endabschnitt der Frässpindel 10 in die Frässpindel 10 eingesetzt ist. Die ringförmig ausgebildete Fläche 26 weist vorzugsweise eine Mehrzahl von Kontaktflächen 21b auf, welche um den Umfang der ringförmig ausgebildeten Fläche 26 herum verteilt angeordnet sind. Die Kontaktflächen 21b dienen wie bereits mit Bezug auf Fig. 2 beschrieben als Kontaktfläche zur Kontaktierung durch den (in Fig. 2a nicht gezeigten) Positionssensor. Durch Vorsehen der Mehrzahl von Kontaktflächen 21b um den Umfang der im Wesentlichen ringförmig ausgebildeten Fläche 26 herum kann für den Positionssensor 16 eine Mehrzahl von Kontaktflächen geschaffen werden.

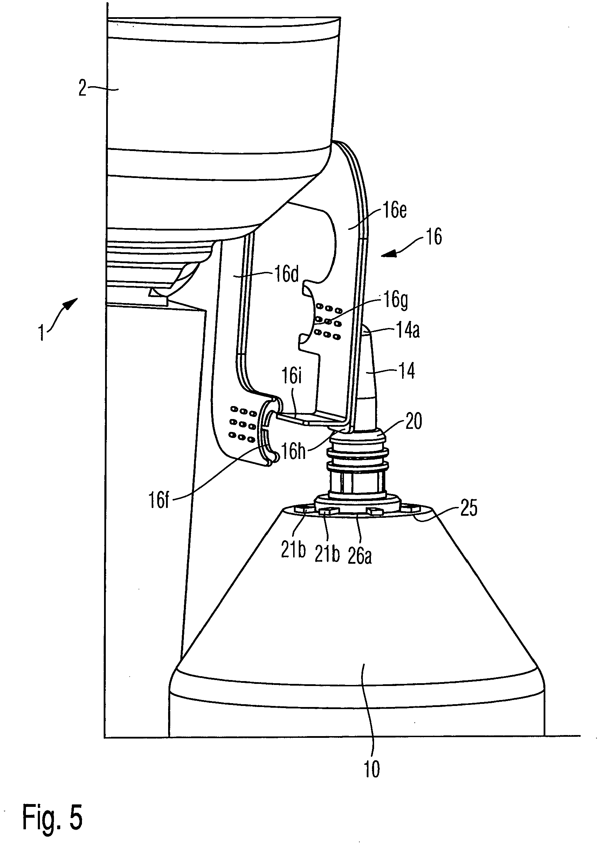

Die im Wesentlichen ringförmig ausgebildete Fläche 26 weist überdies eine Mehrzahl von Düsen 26a auf. Die Düsen 26a sind vorzugsweise derart positioniert, dass eine jeweilige Düse zwischen benachbarten Kontaktflächen 21b angeordnet ist. Die Düsen 26a weisen zum einen die Funktion auf, einen Flüssigkeitsstrahl auf das Fräswerkzeug 14 zu richten, wodurch eine Nassbearbeitung eines Werkstücks durch das Fräswerkzeug 14 ermöglicht wird. Darüber hinaus weisen die Düsen 26a die zusätzliche Funktion auf, dass durch die Düsen 26a Druckluft an eine Umgebung abgebbar ist. Durch einen Ausstoß von Druckluft durch die Düsen 26a kann (wie mit Bezug auf Fig. 5 beschrieben) eine Reinigung des Vorsprungs 20 bzw. des Fräswerkzeugs 14 von Verunreinigungen durchgeführt werden.

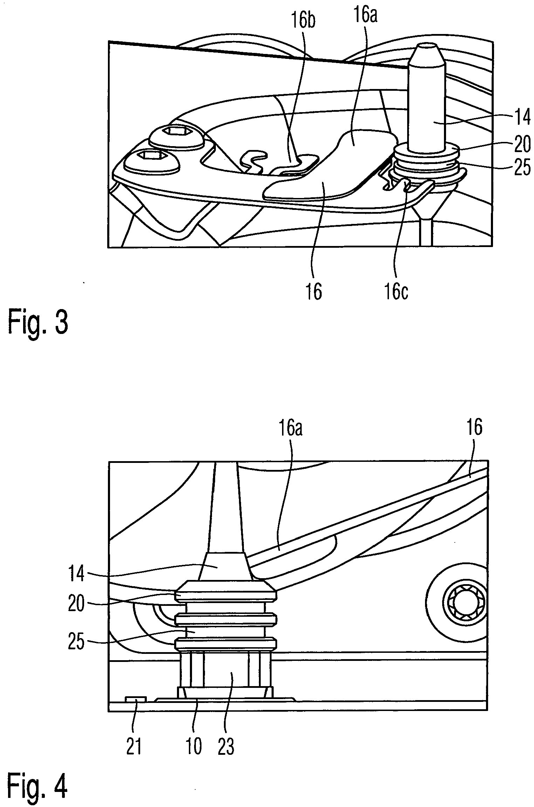

Fig. 3 zeigt eine schematische Darstellung eines Positionssensors zum Erfassen einer Länge des Fräswerkzeugs gemäß der bevorzugten Ausführungsform der Erfindung. Der Positionssensor 16 weist die Sensorspitze 16a auf. Des Weiteren weist der Positionssensor, welcher als im Wesentlichen plan ausgebildetes Metallblech ausgebildet ist, eine Halterung für ein Fräswerkzeug 14 auf.

Die Halterung für das Fräswerkzeug 14 weist ein erstes Halterungselement 16b und ein zweites Halterungselement 16c auf. Das erste Halterungselement 16b ist an einem ersten Abschnitt des Positionssensors 16 angeordnet und das zweite Halterungselement 16c ist an einem zweiten Abschnitt des Positionssensors 16 angeordnet. Das erste Halterungselement und das zweite Halterungselement sind derart ausgebildet, dass das jeweilige Fräswerkzeug 14 im Bereich einer der Nuten 25 des Vorsprungs 20 durch das erste Halterungselement 16b oder das zweite Halterungselement 16c des Positionssensors 16 greifbar ist, indem das erste Halterungselement 16b oder das zweite Halterungselement 16c mit der Nut 25 des Vorsprungs 20 des Fräswerkzeugs 14 in Eingriff bringbar ist.

Das erste Halterungselement 16b und das zweite Halterungselement 16c sind derart versetzt zueinander an dem Positionssensor 16 angeordnet, dass während ein Fräswerkzeug 14 beispielsweise in dem Halterungselement 16c eingefügt ist, durch das Halterungselement 16b ein (in Fig. 3 nicht gezeigtes) weiteres Fräswerkzeug, welches in der Frässpindel 10 angeordnet ist, durch das erste Halterungselement 16b aus der Frässpindel herausnehmbar ist und in einem nachfolgenden Arbeitsschritt das in dem Halterungselement 16c eingesetzte Fräswerkzeug 14 in die dann unbestückte Frässpindel einfügbar ist.

Fig. 4 zeigt eine vergrößerte Detailansicht des in Fig. 3 gezeigten Positionssensors gemäß der bevorzugten Ausführungsform der Erfindung. In der vorliegenden Darstellung ist die Sensorspitze 16a des Sensors in einer Position dargestellt, in welcher diese den als Ring ausgebildeten Vorsprung 20 berührt und somit mit dem elektrisch leitenden Fräswerkzeug einen elektrischen Stromkreis bildet.

Fig. 5 zeigt eine schematische Darstellung des Positionssensors gemäß einer weiteren bevorzugten Ausführungsform der Erfindung. Der Positionssensor 16 weist in der vorliegenden Ausführungsform zwei im Wesentlichen plan ausgebildete Metallbleche auf. Im Gegensatz zu der in Fig. 3 gezeigten Ausführungsform weisen die Metallbleche eine andere Orientierung zueinander auf. Ein erstes Metallblech 16d weist ein erstes Halterungselement 16f zur Halterung eines Fräswerkzeugs auf. Ein zweites Metallblech 16e weist ein zweites Halterungselement 16g zur Halterung eines Fräswerkzeugs auf. Im Gegensatz zur in Fig. 3 gezeigten Ausführungsform sind das erste Halterungselement 16f und das zweite Halterungselement 16g nicht in die gleiche Richtung, sondern aufeinander zu, jedoch mit einem axialen Versatz zueinander, gerichtet.

Das erste Metallblech 16e des Positionssensors 16 weist an einem von dem Roboterarm 2, an welchem der Positionssensor 16 befestigt ist, distal angeordneten axialen Endabschnitt einen Kontaktierungsabschnitt bzw. die Sensorspitze 16a und ein Prallblech 16i auf. Die Sensorspitze 16a dient der Kontaktierung des Vorsprungs 20 des Fräswerkzeugs 14. Darüber hinaus sind um einen Umfang der im Wesentlichen ringförmig ausgebildeten Fläche 26 an dem axialen Endabschnitt der Frässpindel 10 die Mehrzahl von Kontaktflächen 21b sowie die zwischen jeweils benachbart angeordneten Kontaktflächen 21b angeordneten Düsen 26a ausgebildet.

Die Prallfläche 16i ist im Wesentlichen senkrecht zu dem Metallblech 16e im Bereich des axialen Endabschnitts des Metallblechs 16e derart angeordnet, dass aus jeweiligen Düsen 26a austretende Druckluft von dem Prallblech 16i umgelenkt wird und vorzugsweise auf den Vorsprung 20 des Fräswerkzeugs 14 auftrifft, um Verunreinigungen zu entfernen. Die Spitze 14a des Fräswerkzeugs 14 ist vorzugsweise konisch ausgebildet, da bei einem Werkzeugwechsel des Fräswerkzeugs mittels der Halterungselementen 16f, 16g des Positionssensors 16 das in das jeweilige Halterungselement eingefügte Fräswerkzeug nahe an dem konischen Endabschnitt der Frässpindel 10 positioniert wird und durch die konische Ausbildung der Spitze 14a des Fräswerkzeugs 14 somit die Frässpindel 10 durch das Fräswerkzeug 14 nicht berührt wird.

Der Positionssensor 16, d.h. das erste Metallblech 16d und das zweite Metallblech 16e werden zur Positionsmessung, bei welcher die Sensorspitze 16a des Sensors 16 die zum Fräswerkzeug 14 benachbart angeordnete Stirnseite des Vorsprungs 20, insbesondere des Rings berührt, in einem Winkel von 2° bis 5°, vorzugsweise in einem Winkel von 3° bis 4° gegenüber der der Spindelachse (A1) angestellt.

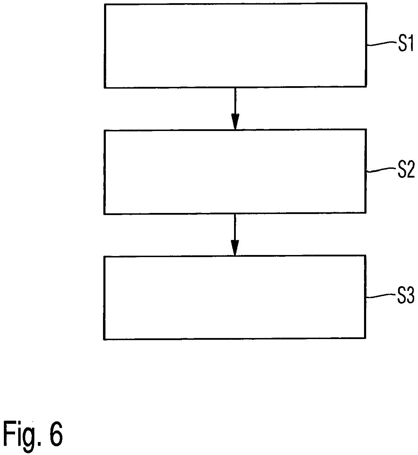

Fig. 6 zeigt ein Ablaufdiagramm eines Verfahrens zum Betreiben der Dentalfräsmaschine gemäß der bevorzugten Ausführungsform der Erfindung.

Das Verfahren umfasst ein Bereitstellen (S1) einer Frässpindel, die in einem Spannfutter geführt ist, wobei das Spannfutter insbesondere drehbar, im Übrigen jedoch maschinenfest gelagert ist und wobei das Fräswerkzeug elektrisch leitend mit der Dentalfräsmaschine verbunden ist.

Das Verfahren umfasst des Weiteren ein Bereitstellen (S2) eines elektrisch leitenden Positionssensors, der gegenüber der Frässpindel mindestens in Richtung der Spindelachse bewegbar gelagert ist.

Das Verfahren umfasst überdies ein Bereitstellen (S3) einer Steuervorrichtung, die eine elektrische Spannung zwischen dem Positionssensor und dem Fräswerkzeug erzeugt und über die Erkennung eines elektrischen Stromes durch den Positionssensor hindurch die Relativposition des Positionssensors zum Fräswerkzeug erfasst, wobei der Positionssensor eine Sensorspitze aufweist, die von der Spindelachse um weniger als 20mm beabstandet ist und insbesondere im Wesentlichen parallel zu dieser geführt ist, dass das Fräswerkzeug einen Vorsprung, insbesondere einen Ring aufweist, der von der Spitze des Fräswerkzeugs beabstandet ist, dass die Sensorspitze den Vorsprung, insbesondere den Ring, für die Erfassung der Position für die Bereitstellung eines Stromkreises berührt und dass der Abstand zwischen der Spitze des Fräswerkzeugs und dem Vorsprung, insbesondere dem Ring, werkzeugspezifisch vorgegeben ist, insbesondere mit einer Genauigkeit von weniger als 50 µm, besonders bevorzugt weniger als 15 µm.

Obwohl die vorliegende Erfindung anhand bevorzugter Ausführungsbeispiele vorstehend beschrieben wurde, ist sie nicht darauf beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Beispielsweise ist eine Dimensionierung bzw. geometrische oder materialtechnische Ausbildung des Positionssensors variierbar bzw. an jeweilige bauliche Anforderungen der Dentalfräsmaschine anpassbar.

## Patentansprüche

1. Dentalfräsmaschine (1) mit einer Frässpindel (10), die in einem Spannfutter (12) geführt ist, wobei das Spannfutter (12) insbesondere drehbar, im Übrigen jedoch maschinenfest gelagert ist und wobei ein Fräswerkzeug (14) elektrisch leitend mit der Dentalfräsmaschine (1) verbunden ist, mit einem elektrisch leitenden Positionssensor (16), der gegenüber der Frässpindel (10) mindestens in Richtung der Spindelachse (A1) bewegbar gelagert ist, und mit einer Steuervorrichtung (18), die eine elektrische Spannung zwischen dem Positionssensor (16) und dem Fräswerkzeug (14) erzeugt und über die Erkennung eines elektrischen Stromes durch den Positionssensor (16) hindurch die Relativposition des Positionssensors (16) zum Fräswerkzeug (14) erfasst, **dadurch gekennzeichnet, dass** der Positionssensor (16) eine Sensorspitze (16a) aufweist, die von der Spindelachse (A1) um weniger als 20mm beabstandet ist und insbesondere im Wesentlichen parallel zu dieser geführt ist, dass das Fräswerkzeug (14) einen Vorsprung (20), insbesondere einen Ring aufweist, der von einer Spitze (14a) des Fräswerkzeugs (14) beabstandet ist, dass die Sensorspitze (16a) eine zum Fräswerkzeug (14) benachbart angeordnete Stirnseite des Vorsprungs (20), insbesondere des Rings, für die Erfassung der Position für die Bereitstellung eines Stromkreises berührt und dass ein Abstand (D) zwischen der Spitze (14a) des Fräswerkzeugs (14) und dem Vorsprung (20), insbesondere dem Ring, werkzeugspezifisch vorgegeben ist, insbesondere mit einer Genauigkeit von weniger als 50 µm, besonders bevorzugt weniger als 15 µm.

2. Dentalfräsmaschine nach Anspruch 1, **dadurch gekennzeichnet, dass** der Vorsprung (20), insbesondere der Ring auf das Fräswerkzeug (14) an dessen Schaft (23) aufgebracht ist, der eine plane Oberfläche mit einer Genauigkeit von insbesondere 15 µm aufweist, bezogen auf den Abstand (D) zur Spitze (14a) des Fräswerkzeugs (14).

3. Dentalfräsmaschine nach einem der vorhergehenden Ansprüche, **dadurch gekennzeichnet, dass** die Spitze (14a) des Fräswerkzeugs (14) mit elektrisch isolierenden Körnern oder Schichten versehen ist, insbesondere mit einer Diamant-Bestückung.

4. Dentalfräsmaschine nach einem der vorhergehenden Ansprüche, **dadurch gekennzeichnet, dass** eine Fräswerkzeug-Erkennungsvorrichtung (22) vorgesehen ist, die das betreffende Fräswerkzeug (14) anhand eines Codes, insbesondere eines optischen zweidimensionalen Codes, insbesondere vorzugsweise eines Data-Matrix-Codes erfasst, wobei das Fräswerkzeug (14) vorvermessen und sein Abstand (D) zwischen Ring und Spitze (14a) des Fräswerkzeugs (14) abgespeichert ist, insbesondere - auch - in der Steuervorrichtung (18).

5. Dentalfräsmaschine nach einem der vorhergehenden Ansprüche, **dadurch gekennzeichnet, dass** eine Temperaturerfassungsvorrichtung (24) vorgesehen ist und dass die Steuervorrichtung (18) einen Speicher für eine Dehnungstabelle aufweist, die die experimentell bestimmte Längung des Fräswerkzeugs (14) basierend auf einer Temperaturänderung abspeichert und basierend auf dieser Längenänderung die exakte Position der Spitze (14a) des Fräswerkzeugs (14) angibt.

6. Dentalfräsmaschine nach einem der vorhergehenden Ansprüche, **dadurch gekennzeichnet, dass** der Vorsprung (20) als Ring ausgebildet ist und insbesondere eine Nut (25) aufweist, über welche das Fräswerkzeug (14) mittels eines Werkzeug-Wechselarms erfassbar und aus der Frässpindel (10) entnehmbar ist.

7. Dentalfräsmaschine nach einem der vorhergehenden Ansprüche, **dadurch gekennzeichnet, dass** der Positionssensor (16) zur Positionsmessung in einem Winkel von 2° bis 5°, vorzugsweise in einem Winkel von 3° bis 4° gegenüber der der Spindelachse (A1) anstellbar ist.

8. Dentalfräsmaschine nach einem der vorhergehenden Ansprüche, **dadurch gekennzeichnet, dass** der Positionssensor (16) ein erstes Metallblech (16d) und ein zweites Metallblech (16e) aufweist, wobei das erste Metallblech (16d) ein erstes Halterungselement (16f) zur Halterung des Fräswerkzeugs (14), und wobei das zweite Metallblech (16e) ein zweites Halterungselement (16g) zur Halterung des Fräswerkzeugs (14) aufweist, wobei das erste Halterungselement (16f) und das zweite Halterungselement (16g) aufeinander zu, jedoch mit einem axialen Versatz zueinander, gerichtet sind.

9. Dentalfräsmaschine nach einem der Ansprüche 2 bis 8, **dadurch gekennzeichnet, dass** an einem oberen Endabschnitt der Frässpindel (10) benachbart zu dem Schaft (23) der Frässpindel (10) eine ringförmig ausgebildete Fläche (26) angeordnet ist, welche durch einen im Wesentlichen flach ausgebildeten Metallring ausgebildet ist, der an dem oberen Endabschnitt der Frässpindel (10) in diese eingesetzt ist.

10. Dentalfräsmaschine nach Anspruch 9, **dadurch gekennzeichnet, dass** die ringförmig ausgebildete Fläche (26) vorzugsweise eine Mehrzahl von Kontaktflächen (21b) aufweist, welche um den Umfang der ringförmig ausgebildeten Fläche (26) herum verteilt angeordnet sind.

11. Dentalfräsmaschine nach Anspruch 10, **dadurch gekennzeichnet, dass** die im Wesentlichen ringförmig ausgebildete Fläche (26) eine Mehrzahl von Düsen (26a) aufweist, welche derart positioniert sind, dass eine jeweilige Düse (26a) zwischen benachbarten Kontaktflächen (21b) angeordnet ist.

12. Dentalfräsmaschine nach Anspruch 11, **dadurch gekennzeichnet, dass** die Düsen (26a) dazu ausgebildet sind, zur Nassbearbeitung eines Werkstücks einen Flüssigkeitsstrahl auf das Fräswerkzeug (14) zu richten, und wobei die Düsen dazu ausgebildet sind, Druckluft an eine Umgebung abzugeben.

13. Verfahren zum Betreiben einer Dentalfräsmaschine (1), mit den Schritten: Bereitstellen (S1) einer Frässpindel (10), die in einem Spannfutter (12) geführt ist, wobei das Spannfutter (12) insbesondere drehbar, im Übrigen jedoch maschinenfest gelagert ist und wobei das Fräswerkzeug (14) elektrisch leitend mit der Dentalfräsmaschine (1) verbunden ist; Bereitstellen (S2) eines elektrisch leitenden Positionssensors (16), der gegenüber der Frässpindel (10) mindestens in Richtung der Spindelachse (A1) bewegbar gelagert ist; Bereitstellen (S3) einer Steuervorrichtung (18), die eine elektrische Spannung zwischen dem Positionssensor (16) und dem Fräswerkzeug (14) erzeugt und über die Erkennung eines elektrischen Stromes durch den Positionssensor (16) hindurch die Relativposition des Positionssensors (16) zum Fräswerkzeug (14) erfasst, **dadurch gekennzeichnet, dass** der Positionssensor (16) eine Sensorspitze (16a) aufweist, die von der Spindelachse (A1) um weniger als 20mm beabstandet ist und insbesondere im Wesentlichen parallel zu dieser geführt ist, dass das Fräswerkzeug (14) einen Vorsprung (20), insbesondere einen Ring aufweist, der von der Spitze (14a) des Fräswerkzeugs (14) beabstandet ist, dass die Sensorspitze (16a) den Vorsprung (20), insbesondere den Ring, für die Erfassung der Position für die Bereitstellung eines Stromkreises berührt und dass der Abstand (D) zwischen der Spitze (14a) des Fräswerkzeugs (14) und dem Vorsprung (20), insbesondere dem Ring, werkzeugspezifisch vorgegeben ist, insbesondere mit einer Genauigkeit von weniger als 50 µm, besonders bevorzugt weniger als 15 µm.
